# EUROPEAN PATENT APPLICATION

(11) **EP 1 168 323 A2**
(43) Date of publication of application: **02.01.2002**
(21) Application number: 01305259.2
(22) Date of filing: 18.06.2001
(51) Int. Cl.: G11B 15/60

(54) **Irregular surfaced tape guide**

(30) Priority: 20.06.2000 US 597882
(71) Applicant: Hewlett-Packard Company, Palo Alto, CA 94304 (US)
(72) Inventor: Anderson, James C., Eagle, ID 83616 (US); Sedlmayer, Thomas, 1140 Vienna (AT); Schonhart, Hubert, 2353 Guntramsdorf (AT)
(74) Representative: Colgan, Stephen James

(57) **Abstract**

A tape guide (38) that has an irregular surface topography designed to reduce the air bearing between the tape (12) and the surface (44) of the hub (42). In one embodiment of the invention, a series concentric grooves (46) in the surface (44) of the hub (42) bleed air from between the surface (44) of the hub (42) and the tape (12) to allow limited contact between the hub (42) and the tape (12).

## Description

### FIELD OF THE INVENTION

The present invention relates generally to tape drives and, more particularly, to flanged tape guides that have an irregular surface to reduce the air bearing between the tape and the surface of the hub.

### BACKGROUND

Information is recorded on and read from a moving magnetic tape with a magnetic read/write head positioned next to the tape. The magnetic "head" may be a single head or, as is common, a series of read/write head elements stacked individually and/or in pairs within the head unit. Data is recorded in tracks on the tape by moving the tape lengthwise past the head. The head elements are selectively activated by electric currents representing the information to be recorded on the tape. The information is read from the tape by moving the tape longitudinally past the head elements so that magnetic flux patterns on the tape create electric signals in the head elements. These signals represent the information stored on the tape.

Data is recorded on and read from each of the parallel tracks on the tape by positioning the head elements at different locations across the tape. That is, head elements are moved from track to track as necessary to either record or read the desired information. Movement of the magnetic head is controlled by an actuator operatively coupled to some type of servo control circuitry. Tape drive head positioning actuators often include a lead screw driven by a stepper motor, a voice coil motor, or a combination of both. The carriage that supports the head is driven by the actuator along a path perpendicular to the direction the tape travels. The head elements are positioned as close to the center of a track as possible based upon the servo information recorded on the tape.

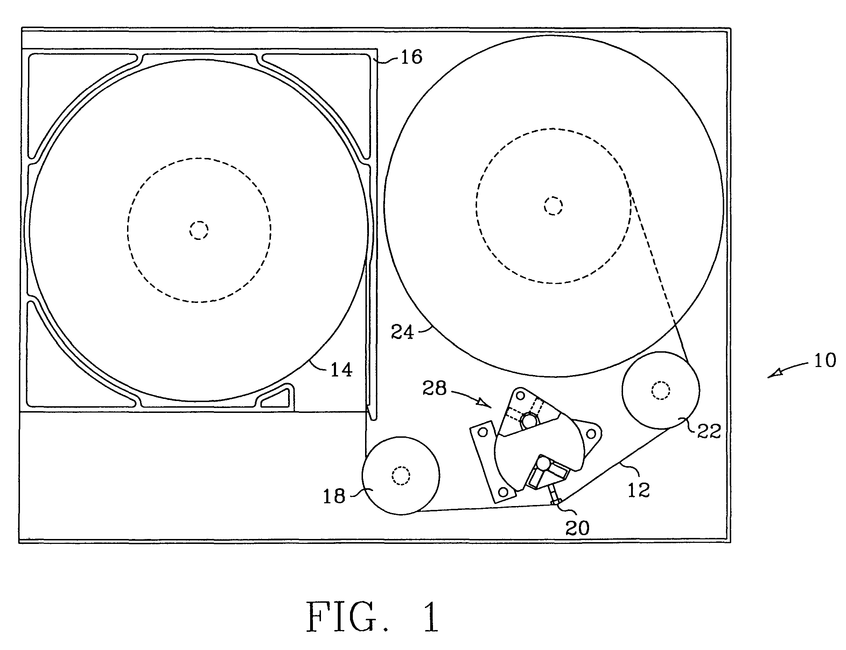

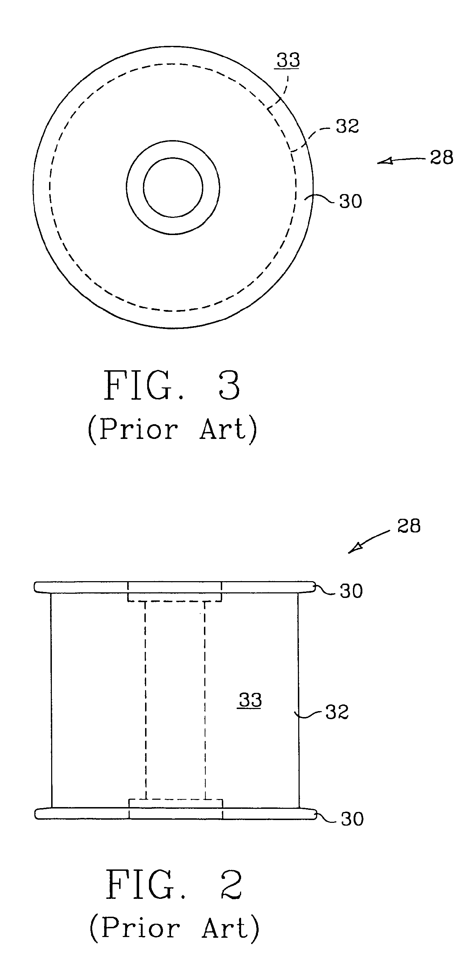

Fig. 1 illustrates generally the configuration of a tape drive 10 typical of those used with single spool tape cartridges. Referring to Fig. 1, a magnetic tape 12 is wound on a single supply spool 14 in tape cartridge 16. Tape cartridge 16 is inserted into tape drive 10 for read and write operations. Tape 12 passes around a first tape guide 18, over a magnetic read/write head 20, around a second tape guide 22 to a take up spool 24. Head 20 is mounted to a carriage and actuator assembly 28 that positions head 20 over the desired track or tracks on tape 12. Head 20 engages tape 12 as tape 12 moves across the face of head 20 to record data on tape 12 and to read data from tape 12. Referring to Figs. 2 and 3, roller guide 28 includes disc shaped flanges 30 and an annular hub 32. Flanges 30 and hub 32 may be machined as a single integral part or as three separate parts bonded together. In either case, flanges 30 function to keep tape 12 at the proper angle as it passes across head 20. If the tape is presented to the head at too great an angle, then the read and write elements in the head may be misaligned to the data tracks. Flanges 30 are also needed to help keep tape 12 properly packed on take up spool 24.

As the tape is pulled over the guides, a film of air is created between the outside surface 33 of hub 32 and tape 12. This film is often referred to as an air bearing. The air bearing allows the tape to move with low friction very rapidly back and forth between flanges 30. Consequently, high frequency tape movement can occur when the edge of the tape bumps abruptly against flanges 30. Read/write head positioning systems have difficulty following such high frequency tape movement. It would be desirable to reduce this air bearing and thereby increases the friction between the tape and the hub to slow the movement of the tape back and forth between the flanges. Slowing the tape in this manner would allow the head positioning system to better follow the tape as it wanders back and forth between the guide flanges.

### SUMMARY

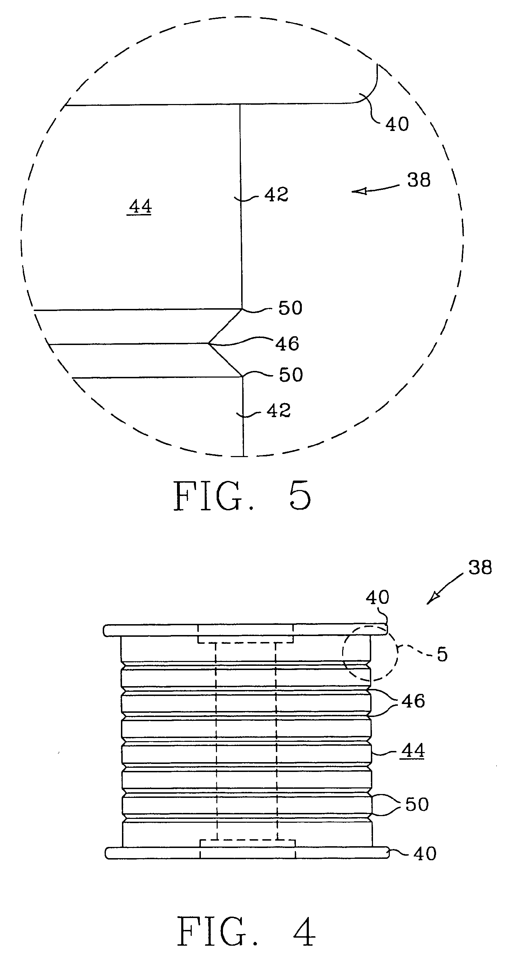

Accordingly, the present invention is directed to a tape guide that has an irregular surface topography designed to reduce the air bearing between the tape and the surface of the hub to allow limited contact between the hub and the tape as the tape passes over the hub. The irregular surface topography increases the friction between the tape and the hub to slow the movement of the tape between the flanges. Slowing the tape in this manner allows the head positioning system to better follow the tape as it wanders back and forth between the guide flanges. In one embodiment of the invention, a series of concentric grooves in the surface of the hub bleed air from between the surface of the hub and the tape. The grooves are configured to reduce but not eliminate the air bearing to allow only limited contact between the hub and the tape. If too much friction develops between the hub and the tape, the friction will tend to push the tape hard into the flanges which, along with the added contact with the hub, increases the risk of tape damage. For example, the tachometer roller described in U.S. Patent No. 5,088,172 uses a tight spiral groove to eliminate the air bearing between the tape and the hub. A tight spiral groove, however, it is neither necessary nor desirable for regular tape guides. Also, if the grooves are too wide, such as the conventional radial grooves shown in Fig. 5 of the '172 Patent, the tape will deform too much as it passes over the hub surface. Hence, narrow grooves that are widely spaced should be used.

### DESCRIPTION OF THE DRAWINGS

Fig. 1 is a top down plan view of a single spool tape drive.
Figs. 2 and 3 are elevation and plan views of a conventional roller tape guide.
Fig. 4 is an elevation view of a roller tape guide constructed according to one embodiment of the present invention in which concentric grooves are formed in the surface of the hub.
Fig. 5 is a detail view of a portion of the roller guide of Fig. 4 showing the grooves in more detail.

### DETAILED DESCRIPTION

As noted above, Fig. 1 illustrates generally the configuration of a tape drive 10 typical of those used with single spool tape cartridges. Referring again to Fig.1, a magnetic tape 12 is wound on a single supply spool 14 in tape cartridge 16. Tape cartridge 16 is inserted into tape drive 10 for read and write operations. Tape 12 passes around a first tape guide 18, over a magnetic read/write head 20, around a second tape guide 22 to a take up spool 24. Head 20 is mounted to a carriage and actuator assembly 26 that positions head 20 over the desired track or tracks on tape 12. Head 20 engages tape 12 as tape 12 moves across the face of head 20 to record data on tape 12 and to read data from tape 12.

A tape guide constructed according to one embodiment of the present invention is shown in Figs. 4-5. Referring to Figs. 4-5, each roller guide 38 includes disc shaped flanges 40 and an annular hub 42. Tape 12 rides on the outer surface 44 of hub 42. Each flange 40 extends radially past outer surface 44 of hub 42. Each flange 40 includes an inside surface 45 facing hub 42. When roller guide 38 is installed in tape drive 10, for example as guides 18 and 22 in Fig. 1, hub 40 rotates on a fixed pin or axle that extends from the tape drive chassis or other suitable support through the center of hub 40. Ball bearings or like are preferred to reduce friction and minimize wear between hub 40 and the pin or axle on which it turns. Flanges 40 and hub 42 may be machined as a single integral part or as separate parts bonded together.

Concentric grooves 46 are formed in the outer surface 44 of hub 42 to bleed air from between tape 12 and hub surface 44. The grooves are designed to allow some contact of the tape with the guide by reducing the air bearing. Although the size and quantity of grooves 46 may be varied as necessary or desirable to accommodate particular operating conditions and performance criteria for guide 38, the grooves should be comparatively narrow and widely spaced. For ½ inch type data storage tapes that have a nominal tape width of 12.65mm running on a square corner guide 38, it is expected that concentric grooves not more than 0.50mm deep and 1.0mm wide spaced apart not less than 1.0mm (measured from the center of one groove to the center of another groove) will significantly reduce the air bearing between tape 12 and hub 42 without damaging the tape or significantly increasing tape wear. The presently preferred configuration for ½ inch tapes uses seven evenly spaced V shaped grooves 42 0.25mm deep, 0.50mm wide and spaced apart 1.5mm.

While the invention has been shown and described with reference to the configuration shown in Figs. 4-5, other configurations that reduce the air bearing or cut through the air bearing to allow some contact between the tape and the hub may be possible. It should be understood, therefore, that variations of and modifications to the configuration shown and described may be made without departing from the spirit and scope of the invention which is defined in following claims.

## Claims

1. A tape guide (38), comprising a hub (42) having a surface (44) over which a tape (12) passes and spaced apart parallel flanges (40) extending out from the hub (42), the surface (44) of the hub (42) having an irregular topography configured to selectively reduce parts of an air bearing formed between the surface (44) of the hub (42) and the tape (12) to allow limited contact between the hub (42) and the tape (12) as the tape (12) passes over the hub (42).

2. The tape guide (38) of Claim 1, wherein the irregular topography is configured to bleed air from between the surface (44) of the hub (42) and the tape (12) as the tape (12) passes over the hub (42).

3. The tape guide (38) of Claim 2, wherein the irregular topography comprises narrow, widely spaced concentric grooves (46) in the surface (44) of the hub (42).

4. A tape guide (38), comprising a hub (42) having a surface over which the tape (12) passes, spaced apart parallel flanges (40) extending out from the hub (42) and a series of concentric grooves (46) in the surface (44) of the hub (42), each groove (46) not more than 1.0mm wide and the grooves (46) spaced apart from one another not less than 1.0mm as measured from the center of one groove (46) to the center of another groove (46).

5. The tape guide (38) of Claim 4, wherein the grooves (46) are not more than 0.50mm deep and spaced apart nominally 1.5mm as measured from the center of one groove (46) to the center of another groove (46).

6. The tape guide (38) of Claim 4, wherein the grooves (46) are evenly spaced V shaped grooves nominally 0.25mm deep, 0.50mm wide and spaced apart about 1.5mm as measured from the center of one groove (46) to the center of another groove (46).

7. A tape drive (10), comprising:
a read/write head (20);
an actuator (26) operatively coupled to the head 20), the actuator (26) configured to move the head in a direction generally perpendicular to the direction of motion of the tape (12) over the head (20);
a tape guide (38) disposed near the head (20), the tape guide (38) comprising a hub (42) having a surface (44) over which the tape (12) passes, spaced apart parallel flanges (40) extending out from the hub (42) and a series of concentric grooves (46) in the surface (44) of the hub (42), each groove (46) not more than 1.0mm wide and the grooves (46) spaced apart from one another not less than 1.0mm as measured from the center of one groove (46) to the center of another groove (46).

8. The tape drive (10) of Claim 7, wherein the grooves (46) are not more than 0.50mm deep and spaced apart nominally 1.5mm as measured from the center of one groove (46) to the center of another groove (46).

9. The tape drive (10) of Claim 7, wherein the grooves (46) are evenly spaced V shaped grooves nominally 0.25mm deep, 0.50mm wide and spaced apart about 1.5mm as measured from the center of one groove (46) to the center of another groove (46).
